Europäisches Patentamt

European Patent Office

Office européen des brevets

(19)

(11) Veröffentlichungsnummer: **0 149 791**
**B1**

(12) **EUROPÄISCHE PATENTSCHRIFT**

(45) Veröffentlichungstag der Patentschrift:
**09.03.88**

(21) Anmeldenummer: **84115273.9**

(22) Anmeldetag: **12.12.84**

(51) Int. Cl.⁴: **C 08 L 71/04, C 08 L 25/14,
C 08 L 51/04**

(54) **Thermoplastische Formmassen.**

(30) Priorität: **22.12.83 DE 3346302**

(43) Veröffentlichungstag der Anmeldung:
**31.07.85 Patentblatt 85/31**

(45) Bekanntmachung des Hinweises auf die Patenterteilung:
**09.03.88 Patentblatt 88/10**

(84) Benannte Vertragsstaaten:
**BE DE FR GB IT NL SE**

(56) Entgegenhaltungen:
**DE - A - 2 751 328
US - A - 4 311 633**

(73) Patentinhaber: **BASF Aktiengesellschaft,
Carl-Bosch-Strasse 38, D-6700 Ludwigshafen (DE)**

(72) Erfinder: **Hambrecht, Jürgen, Dr., Werderstrasse 30,
D-6900 Heidelberg (DE)**
Erfinder: **Illers, Karl Heinz, Dr., Huttenstrasse 20,
D-6701 Otterstadt (DE)**
Erfinder: **Echte, Adolf, Dr., Leuschnerstrasse 42,
D-6700 Ludwigshafen (DE)**
Erfinder: **Swoboda, Johann, Dr., Neuwiesenstrasse 28,
D-6700 Ludwigshafen (DE)**

## Beschreibung

Die Erfindung betrifft thermoplastische Formmassen auf der Grundlage von Polyphenylenethern und Styrol-Methylmethacrylat- Copolymerisaten, die gegebenenfalls schlagzäh modifiziert sein können.

Polymermischungen aus Polyphenylenethern und Styrolpolymerisaten sind bekannt und in einer Reihe von Patentschriften beschrieben worden. Zum Stand der Technik nennen wir (1) US-A-3 383 435, (2) DE-A-27 13 430, (3) US-A-4 360 618, (4) EP-B-55 473 und (5) DE-A-31 27 233.

In (1) werden Zusammensetzungen von Polyphenylenethern und Styrolharzen beschrieben. Die Styrolharze können sowohl mit Kautschuk, zumeist Polybutadien, modifiziert sein, es kann aber auch reines Polystyrol eingesetzt werden. Die Hitzebeständigkeit, Chemikalienbeständigkeit und die mechanischen Eigenschaften dieser Mischungen genügen häufig jedoch nicht den Anforderungen.

Ersetzt man die Styrolharze in (1) durch Styrol-Maleinsäureanhydrid-Copolymerisate (S-MSA), wie sie in (2) beschrieben werden, so kann die Wärmeformbeständigkeit und Chemikalienbeständigkeit der Abmischungen verbessert werden. Die mechanischen Eigenschaften dieser Mischungen sind jedoch unbefriedigend.

In (3) werden Polymerisatmischungen aus Polyphenylenethern und Styrol-Acrylnitril-Copolymerisaten beschrieben, die eine hohe Steifigkeit und sehr gute Chemikalienbeständigkeit haben. Die Zähigkeit und auch die Wärmeformbeständigkeit sind nicht voll befriedigend.

Polymermischungen aus Polyphenylenethern und Copolymerisaten aus Olefinen und Glycidyl-(meth)acrylaten werden in (4) beschrieben. Der Zusatz dieses Copolymerisates verbessert die Verarbeitbarkeit dieses Gemisches, die Wärmeformbeständigkeit und die Steifigkeit wird jedoch verringert.

In (5) werden schliesslich Mischungen aus Polyphenylenethern, einem EPDM-Polymerisat, schlagzähem Polystyrol sowie einem Styrol-Butylacrylat-Copolymerisat, das im wesentlichen aus einem Polybutylacrylat-Grundpolymerisat auf das Polystyrol aufgepfropft wurde, besteht, beschrieben. Solche Mischungen besitzen eine gute Witterungsbeständigkeit und ausserdem eine gute Zähigkeit und Verarbeitbarkeit. Die Wärmeformbeständigkeit und Steifigkeit sowie die Chemikalienbeständigkeit befriedigen jedoch nicht.

Aufgabenstellung des Anmeldegegenstandes sind daher thermoplastische Formmassen auf der Basis von Mischungen aus Polyphenylenethern und Styrolpolymerisaten, die eine ausreichend hohe Wärmeformbeständigkeit bei guter Chemikalienbeständigkeit und ausgewogenen mechanischen Eigenschaften aufweisen.

Diese Aufgabe wird erfindungsgemäss gelöst durch Formmassen, die ein Gemisch aus

(I) 95 bis 5 Gew.-% eines Polyphenylenethers und

(II) 5 bis 95 Gew.-% eines Copolymerisates, bestehend aus

$A_1$) 74 bis 99 Gew.-Teilen einer monovinylaromatischen Monomereneinheit,

$A_2$) 1 bis 26 Gew.-Teilen an Einheiten von Acrylsäurealkylester mit bis zu 8 C-Atomen im Alkylanteil und in Mischung mit

B) 0 bis 20 Gew.-Teile eines Pfropfpolymerisates mit einer Glastemperatur von $\leq$ 0 °C enthalten, wobei die Gewichtsteile sich auf 100 Gew.-Teile summieren.

Nachstehend werden die Komponenten der erfindungsgemässen Formmasse, deren Herstellung und die Herstellung der Formmasse beschrieben.

Komponente I

Die Komponente I der erfindungsgemässen Formmasse stellt mindestens ein aus einem Polyphenylenether (PPE) aufgebautes Harz dar, das in Mengen von 95 bis 5 Gew.-%, vorzugsweise 70 bis 30 Gew.-%, jeweils bezogen auf die Mischung aus I+II, vorhanden ist.

Bei den Polyethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyether können in ortho-Stellung zum Sauerstoff, Wasserstoff, Halogen, Kohlenwasserstoffreste, die kein α-ständiges tertiäres Wasserstoffatom besitzen, Halogenkohlenwasserstoffe, Phenylreste und Kohlenwasserstoff-oxi-Reste tragen. So kommen in Frage: Poly(2,6-dichlor-1,4-phenylen)-ether, Poly(2,6-diphenyl-1,4-phenylen)-ether, Poly(2,6-dimethoxy-1,4- phenylen)ether, Poly(2,6-dimethyl-1,4-phenylen)-ether, Poly(2,6-dibrom-1,4-phenylen)-ether. Bevorzugterweise wird der Poly(2,6- dimethyl-1,4-phenylen)ether eingesetzt. Besonders bevorzugt werden Poly-(2,6-dimethyl-1,4-phenylen)ether mit einer Grenzviskosität zwischen 0,45 und 0,65 dl/g (gemessen in Chloroform bei 30 °C).

Die Polyphenylenether können in bekannter Weise z.B. in Gegenwart von komplexbildenden Mitteln wie Kupferbromid und sek. Dibutylamin, aus den Phenolen hergestellt werden.

Komponente II

Die Komponente II der erfindungsgemässen Formmassen ist ein Styrol-Alkylacrylat-Copolymerisat, das gegebenenfalls schlagfest modifiziert sein kann. Das Copolymerisat ist aufgebaut aus den Bestandteilen $A_1$) und $A_2$) und gegebenenfalls B.

Die Komponente II ist in einem Anteil von 5 bis 95 Gew.-%, vorzugsweise von 30 bis 70 Gew.-%, bezogen auf die Mischung aus I und II in den erfindungsgemässen Formmassen enthalten.

Der Aufbau der Komponente II ist wie folgt:

Als monovinylaromatische Monomere $A_1$) kommen Styrol, α-Methylstyrol oder ein kernalkyliertes Styrol mit bis zu 12 Kohlenstoffatomen in Frage. Besonders bevorzugt werden Styrol, α-Methylstyrol und para-Methylstyrol.

Als Monomere A₂) eignen sich Acrylsäurealkylester mit bis 8 Kohlenstoffatomen in der Alkylgruppe. Bevorzugt werden Methylacrylat, Ethylacrylat, Propylacrylat, n-Butylacrylat, iso-Butylacrylat, tert.-Butylacrylat, Ethylhexylacrylat, Hydroxypropylacrylat eingesetzt. Ganz besonders bevorzugt sind Methylacrylat, Ethylacrylat, Butylacrylat und Ethylhexylacrylat.

Als Komponente II eignen sich insbesondere Copolymerisate, die ausgewählt sind aus der Gruppe der Styrol-Methacrylat-, Styrol-Ethylacrylat-, Styrol-Butylacrylat-, Styrol-Ethylhexylacrylat-Copolymerisate und der Butadien-Styrol-Methylacrylat-, Butylacrylat-Styrol-Methylacrylat-bzw. Butadien-Butylcrylat-Styrol-Methylacrylat-Copolymerisate.

Die Monomeren A₁) und A₂) sind in der Komponente II im Verhältnis von 74 bis 99 Gew.-Teilen A₁), zu 1 bis 26 Gew.-Teilen A₂), vorzugsweise 75 bis 99 Gew.-Teilen A₁) zu 1 bis 25 Gewichtsteilen A₂) enthalten, wobei, falls keine Komponente B enthalten ist, sich die Gewichtsteile zu 100 summieren.

Die Bestandteile der Komponente II werden durch kontinuierliche Mischpolymerisation der Monomeren A₁) und A₂) bei hohen Temperaturen unter starkem Rühren hergestellt. Die Monomeren A₁) und A₂) werden kontinuierlich in ein Polymerisationsgefäss eingebracht und gleichzeitig wird eine diesen Mengen entsprechende Menge des Polymerisationsgemisches aus dem Gefäss abgezogen (vgl. A.W. Hanson, R.L. Zimmermann, Industrial Eng. Chemistry 49 (1957), Seite 803). Die Bestandteile A₁ und A₂ können jedoch auch nach allen anderen bekannten Polymerisationsverfahren polymerisiert werden.

Der Bestandteil B ist eine Elastomerkomponente, die in den erfindungsgemässen Formmassen gegebenenfalls enthalten ist. Bestandteil B der Komponente II ist ein Pfropfpolymerisat, das in einem Anteil von 0 bis 20 Gew.-Teilen, insbesondere von 1 bis 18 Gew.-Teilen in der Komponente II enthalten ist, wobei die Gewichtsteile des Bestandteils B sich mit den Gewichtsteilen der Bestandteile A₁) und A₂) auf 100 Gewichtsteile summieren.

Dieses Pfropfmischpolymerisat ist aufgebaut aus 10 bis 50 Gew.- Teilen, vorzugsweise 15 bis 45 Gew.-Teilen an Einheiten aus mindestens einem vinylaromatischen Monomeren, das bis zu 12 Kohlenstoffatome enthält, und 0,1 bis 25 Gew.-Teilen, vorzugsweise 5 bis 20 Gew.-Teilen von Einheiten mindestens eines (Meth)acrylsäureesters und/oder Acrylnitril und/oder (Meth)acrylsäure und/oder Maleinsäureanhydrid als Pfropfhülle auf 50 bis 90 Gew.-%, insbesondere 60 bis 80 Gew.-Teile einer elastomeren Pfropfgrundlage (Kautschukkomponente).

Dieses Pfropfmischpolymerisat soll eine Glastemperatur (nach K.H. Illers und H. Breuer. Kolloid-Zeitschrift 176 (1961), Seite 110) haben, die $\leq$ 0 °C beträgt. Als Kautschuk kommen beispielsweise in Frage: Polybutadien (vgl. DE-A-14 20 775 und DE-A-14 95 089), Copolymerisate aus Butadien und Styrol (vgl. GB-A-649 166), Copolymerisate aus Butadien und Styrol, Polyacrylsäureester, die gegebenenfalls vernetzt sein können (vgl. DE-A-11 38 921, DE-B-12 24 486 oder DE-B-12 60 135) sowie Copolymerisate aus Acrylsäureester und Butadien (vgl. DE-B-12 38 207), ferner Elastomere von Copolymerisaten aus Acrylsäureestern mit Styrol, Acrylnitril und Vinylethern und Copolymerisate aus Ethylen und einem nicht konjugierten Dien (EPDM-Kautschuk) sowie hydrierte Styrol-Butadien-Kautschukpolymerisate.

Die vinylaromatischen Pfropfmonomeren sind Styrol, α-Methylstyrol und/oder kernalkylierte Styrole mit bis zu 12 C-Atomen; als polare Monomere kommen (Meth)acrylsäureester von Alkanolen mit bis zu 8 C-Atomen, sowie Acrylnitril, (Meth)acrylsäure oder Maleinsäureanhydrid oder Mischungen davon in Betracht.

Die Herstellung Pfropfmischpolymerisate B ist an sich bekannt. Sie können z.B. hergestellt werden durch Polymerisation eines Gemisches von Styrol und (Meth)acrylaten in Gegenwart eines Kautschuks.

Die Pfropfcopolymerisation kann dabei bekannterweise in Lösung, Suspension oder vorzugsweise in Emulsion erfolgen.

Wesentlich für das Eintreten des Erfolges ist nunmehr, dass die Bestandteile A und B der Komponente II der erfindungsgemässen Formmasse derart aufgebaut und in der Mischung so aufeinander abgestimmt sind, dass der Absolutbetrag der polaren Monomeren in den Bestandteilen A und B um weniger als 10 differiert.

Die Komponente II der erfindungsgemässen Formmassen wird vorzugsweise durch Abmischen einer Schmelze der Bestandteile A und B erhalten. Dabei werden die Bestandteile A und B als Schmelze bei Temperaturen zwischen 200 und 260 °C auf Extrudern, Walzen oder Knetern bei Verweilzeiten von einigen Minuten gemischt. Man kann aber auch Lösungen des Bestandteils A und des Pfropfmischpolymerisates B vermischen und die Lösungsmittel anschliessend entgasen.

Zusätzlich zu den Komponenten I und II kann die erfindungsgemässe Formmasse gegebenenfalls übliche Zusatzstoffe in wirksamen Mengen enthalten. Als solche Zusatzstoffe seien genannt: Pigmente, Farbstoffe, Füllstoffe, Flammschutzmittel wie z.B. Triarylphosphate, weitere verträgliche Polymere, Antistatika, Antioxidantien und Schmiermittel.

Herstellung der erfindungsgemässen Formmassen aus den Komponenten I und II

Die Herstellung der erfindungsgemässen Formmasse kann aus den Komponenten I und II, wie nachstehend beschrieben, erfolgen. Bevorzugt wird jedoch die Herstellung aus den Bestandteilen A, B und Komponente I und gegebenenfalls anderen Zusatzstoffen, nämlich durch Mischen der Weich- und Hartkomponente (der Komponente II) und der Polyphenylenether. Üblicherweise erfolgt die Herstellung auf Vorrichtungen, die ein homogenes Mischen zulassen, wie Knetern, Extrudern oder Walzenmischgeräten.

Die Herstellung der erfindungsgemässen Formmasse kann aber auch durch intensives Durchmischen von Lösungen der einzelnen Komponenten und anschliessendes Eindampfen des Lösungsmittels hergestellt werden. Auch kombinierte Lösungs- und Schmelzmischprozesse, z.B. auf Entgasungsextrudern, sind erfolgreich erprobt worden.

Für die Herstellung der erfindungsgemässen Formmassen wurden die in Tabelle II aufgeführten Copolymerisate Nr. 1 bis Nr. 5 und gegebenenfalls die in der Tabelle 2 genannten Pfropfkautschuke $B_1$ bis $B_3$ verwendet. Zusammensetzung und weitere Eigenschaften sind in den genannten Tabellen angegeben.

Als Komponente I wurde ein Handelsprodukt auf Basis eines Poly-(2,6-dimethyl-1,4-phenylen)ethers verwendet, das eine Grenzviskosität von 0,5 (dl/g) und eine Kerbschlagzähigkeit von 4 (kJ/m) aufwies.

Tabelle 1

Styrol-Alkylacrylat-Copolymerisate (Bestandteile $A_1 + A_2$)

| Bezeichnung | Zusammensetzung in Gew.-Teilen | | | | Kerbschlag-zähigkeit | Vicat-Temperatur |
|---|---|---|---|---|---|---|
| | S | MA | EA | BA | $(kJ/m^2)$ | (°C) |
| Nr. 1 | 80 | 20 | – | – | 4 | 99 |
| Nr. 2 | 75 | 25 | – | – | 4 | 99 |
| Nr. 3 | 73 | 27 | – | – | 4 | 99 |
| Nr. 4 | 75 | – | 25 | – | 4 | 98 |
| Nr. 5 | 75 | – | – | 25 | 5 | 90 |

S = Styrol;
MA = Methylmethacrylat
EA = Ethylacrylat
BA = n-Butylacrylat

Die Copolymerisate Nr. 1–Nr. 5 hatten eine Viskositätszahl von 75 (ml/g), gemessen 0,5%ig in DMF bei 25 °C.

Zu Vergleichszwecken wurde ausserdem ein Pfropfcopolymerisat $B_4$ von Styrol auf Polybutylacrylat hergestellt, wie es in Tabelle 2 beschrieben ist.

Tabelle 2

Pfropfmischpolymerisate (Bestandteil B)

| Bezeichnung | Zusammensetzung des Kautschuks (%) | | Zusammensetzung Pfropfhülle (%) | | | TG |
|---|---|---|---|---|---|---|
| | Bu | BA | S | MMA | AN | (°C) |
| $B_1$ | 100 | – | 80 | 20 | – | -81 |
| $B_2$ | – | 100 | 80 | 20 | – | -46 |
| $B_3$ | 50 | 50 | 80 | 15 | 5 | -67 |
| $B_4$ | – | 100 | 100 | – | – | -48 |

Bu = Butadien,
BA = n-Butylacrylat,
S = Styrol,
MMA = Methylmethacrylat
AN = Acrylnitril

Als Komponente III wurde Triphenylphosphat eingesetzt.

Die in den Versuchen und Vergleichsversuchen genannten Parameter wurden wie folgt bestimmt:

1. Die Kerbschlagzähigkeit in $(kJ/m^2)$ wurde nach DIN 53 453 bei einer Massetemperatur von 250 °C an spritzgegossenen Normkleinstäben gemessen.

2. Der Elastizitätsmodul in $(N/mm^2)$ wurde nach DIN 53 457 an spritzgegossenen Schulterstäben ermittelt.

3. a) Die Viskositätszahlen, VZ, in (ml/g) wurden an einer 0,5%igen Lösung in Dimethylformamid bestimmt.

b) Grenzviskosität in (dl/g) wurde in $CHCl_3$ bei 30 °C gemessen.

4. Der Vicat-Erweichungspunkt in °C wurde nach DIN 53 460, Verfahren B, in Silikonöl bestimmt.

5. Die Tg-Werte der Kautschuke wurden nach K.H. Illers und H. Breuer, Kolloid-Zeitschrift, loc. cit. bestimmt.

6. Die Chemikalienbeständigkeit wurde in einem Schnelltest an Spritzkästchen, die mit Isopropanol gefüllt und 48 h gelagert wurden überprüft und visuell beurteilt:

Note 1 = keine Veränderungen
Note 2 = Oberflächenaufrauhung, Trübung
Note 3 = Verformungen

Die Erfindung wird nachstehend anhand von Beispielen und Vergleichsversuchen näher erläutert, wobei sich die genannten Teile und Prozente, sofern nichts anders vermerkt ist, auf das Gewicht beziehen.

Beispiel 1 bis 9, Vergleichsbeispiele I bis IV
Die in der Tabelle 3 genannten Komponenten wurden in einem Fluidmischer vorgemischt und anschliessend auf einem Kokneter bei etwa 220 bis 230° C unter Stickstoff innig verknetet. Die Verweilzeit betrug etwa 4 Minuten. Das dabei erhaltene Granulat wurde auf einer Einwellen-Extruder-Schnecke aufgeschmolzen und zu gleichmässigem, für die Spritzgussverarbeitung geeigneten Granulat abgeschlagen. In Tabelle 3 sind die Eigenschaften der Mischungen aufgeführt.

Wie die Ergebnisse der Tabelle 3 verdeutlichen, können nur mit statistisch aufgebauten Styrol-Alkylacrylat-Copolymerisaten bestimmter Zusammensetzung Mischungen mit guten mechanischen Eigenschaften erzielt werden. Styrol-Alkylacrylat-Pfropfcopolymerisate weisen diese günstigen Eigenschaften nicht auf, was auf Unverträglichkeit mit dem Abmischpartner Polyphenylenether zurückzuführen ist.

Tabelle 3

| Beispiel | Zusammensetzung (Gew.-%) Komponenten | | | Kerbschlagzähigkeit $(kJ/m^2)$ | Vicat-Temp. (°C) | E-Modul $(N/mm^2)$ | Chemikalienbeständigkeit Note |
|---|---|---|---|---|---|---|---|
| | I | II | III | | | | |
| 1 | 70 | 30 (100 Tle. Nr. 1) | – | 7 | 157 | 3000 | 1 |
| 2 | 70 | 30 (100 Tle. Nr. 2) | – | 7 | 157 | 3000 | 1 |
| 3 | 70 | 30 (100 Tle. Nr. 4) | – | 7 | 156 | 2900 | 1 |
| 4 | 70 | 30 (100 Tle. Nr. 5) | – | 8 | 150 | 2700 | 1 |
| 5 | 60 | 40 (75 Tle. Nr. 2) 25 Tle. $B_1$) | – | 13 | 146 | 2700 | 1 |
| 6 | 60 | 40 (75 Tle. Nr. 4) 25 Tle. $B_3$) | – | 13 | 145 | 2600 | 1 |
| 7 | 60 | 40 (75 Tle. Nr. 5) 25 Tle. $B_2$) | – | 14 | 140 | 2500 | 1 |
| 8 | 50 | 40 (75 Tle. Nr. 5) 25 Tle. $B_2$) | 10 | 15 | 124 | 2400 | 1 |
| 9 | 50 | 40 (50 Tle. Nr. 4) 50 Tle. $B_2$) | 10 | 16 | 121 | 2300 | 1 |
| Vergleichsversuche (nicht erfindungsgemäss) | | | | | | | |
| I | 70 | 30 (100 Tle. Nr. 3) | – | 5 | 143 | 3000 | 2 |
| II | 70 | 30 (100 Tle. $B_4$) | – | 7 | 138 | 2700 | 2 |
| III | 60 | 40 (75 Tle. Nr. 3) 25 Tle. $B_3$) | – | 8 | 127 | 2600 | 3 |
| IV | 60 | 40 (75 Tle. Nr. 4) 25 Tle. $B_1$) | – | 6 | 123 | 2600 | 3 |

**Patentansprüche**

1. Thermoplastische Formmassen, enthaltend ein Gemisch aus

(I) 95 bis 5 Gew.-% eines Polyphenylenethers und

(II) 5 bis 95 Gew.-% eines Copolymerisates, bestehend aus

A₁) 74 bis 99 Gew.-Teilen einer monovinylaromatischen Monomereneinheit,

A₂) 1 bis 26 Gew.-Teilen an Einheiten von Acrylsäurealkylester mit bis zu 8 C-Atomen im Alkylanteil und in Mischung mit

B) 0 bis 20 Gew.-Teilen eines Pfropfpolymerisates mit einer Glastemperatur von ≦ 0 °C, wobei die Gewichtsteile sich auf 100 Gew.-Teile summieren, und das Pfropfpolymerisat aufgebaut ist aus 10 bis 50 Gew.-Teilen an Einheiten aus mindestens einem vinylaromatischen Monomeren, das bis zu 12 Kohlenstoffatome enthält, und 0,1 bis 25 Gew.-Teilen von Einheiten mindestens eines (Meth)acrylsäureesters und/oder Acrylnitril und/oder (Meth)acrylsäure und/oder Maleinsäureanhydrid als Pfropfhülle auf 50 bis 90 Gew.-% einer elastomeren Pfropfgrundlage.

2. Thermoplastische Formmasse nach Anspruch 1, dadurch gekennzeichnet, dass als Polyphenylenether I Poly(2,6-dimethyl-1,4-phenylen) ether eingesetzt wird.

3. Thermoplastische Formmasse nach Anspruch 1, dadurch gekennzeichnet, dass das Copolymerisat II ausgewählt ist aus der Gruppe der Styrol-Methylacrylat-, Styrol-Ethylacrylat-, Styrol-Butylacrylat-, Styrol-Ethylhexylacrylat-Copolymerisate und der Butadien-Styrol-Methyl-acrylat-, Butylacrylat-Styrol-Methylacrylat- bzw. Butadien-Butylacrylat-Styrol-Methylacrylat-Copolymerisate.

4. Thermoplastische Formmasse nach den Ansprüchen 1 bis 3, dadurch gekennzeichnet, dass die Komponenten I und II im Verhältnis von 30 bis 70% und 70 bis 30% eingesetzt werden.

5. Thermoplastische Formmasse gemäss den Ansprüchen 1 bis 4, dadurch gekennzeichnet, dass sie Triarylphosphat enthalten.

6. Verwendung der Formmassen gemäss den Ansprüchen 1 bis 5 zur Herstellung von Formteilen.

**Revendications**

1. Matières à mouler thermoplastiques, contenant un mélange de

(I) 95 à 5% en poids d'un poly(éther de phénylène) et

(II) 5 à 95% en poids d'un copolymère composé de

A₁) 74 à 99 parties en poids d'une unité monomère monovinyl- aromatique,

A₂) 1 à 26 parties en poids d'unités dérivées d'esters d'alkyle de l'acide acrylique à radicaux alkyle en C₁ à C₈, en mélange avec

B) 0 à 20 parties en poids d'un polymère de greffage avec une température de transition vitreuse égale ou inférieure à 0 °C – la somme des parties en poids étant égale à 100 –, le polymère de greffage étant constitué de 10 à 50 parties en poids d'unités dérivées d'au moins un monomère vinyl-aromatique avec jusqu'à 12 atomes de carbone et 0,1 à 25 parties en poids d'au moins un ester (méth)acrylique et(ou) de l'acrylonitrile et(ou) de l'acide (méth)acrylique et(ou) de l'anhydride maléique en tant qu'enveloppe greffée sur 50 à 90%(lire parties) en poids d'une matrice de greffage élastomère.

2. Matière à mouler thermoplastique suivant la revendication 1, caractérisée en ce que le poly-(éther de phénylène) I employé est le poly(éther de diméthyl- 2,6 phénylène- 1,4).

3. Matière à mouler thermoplastique suivant la revendication 1, caractérisée en ce que le copolymère II est choisi parmi les copolymères du styrène et de l'acrylate de méthyle, du styrène et de l'acrylate d'éthyle, du styrène et de l'acrylate de butyle et du styrène et de l'acrylate d'éthyl-hexyle et les copolymères butadiène-styrène-acrylate de méthyle, acrylate de butyle-styrène-acrylate de méthyle et butadiène-acrylate de butyle-styrène-acrylate de méthyle.

4. Matière à mouler thermoplastique suivant les revendications 1 à 3, caractérisée en ce que les composants I et II sont mis en œuvre dans un rapport(en %) compris entre 30 : 70 et 70 : 30.

5. Matière à mouler thermoplastique suivant les revendications 1 à 4, caractérisée en ce qu'elle contient du triaryl-phosphate.

6. Utilisation des matières à mouler suivant les revendications 1 à 5 pour la fabrication d'articles façonnés.

**Claims**

1. A thermoplastic molding material which contains a mixture of

(I) from 95 to 5% by weight of a polyphenylene ether and

(II) from 5 to 95% by weight of a copolymer consisting of

A₁) from 74 to 99 parts by weight of a monovinylaromatic monomer unit,

A₂) from 1 to 26 parts by weight of alkyl acrylate units where alkyl is of not more than 8 carbon atoms, and mixed with

B) from 0 to 20 parts by weight of a graft polymer which has a glass transition temperature of ≦ 0 °C, the sum of the number of parts by weight being 100, and the graft polymer consisting of from 10 to 50 parts by weight of units of one or more vinyl-aromatic monomers of not more than 12 carbon atoms and from 0.1 to 25 parts by weight of units of one or more (meth)acrylates and/or acrylonitrile and/or (meth)acrylic acid and/or maleic anhydride as a grafted shell on from 50 to 90% by weight of an elastomeric grafting base.

2. A thermoplastic molding material as claimed in claim 1, wherein poly(2,6-dimethyl-1,4-phenylene) ether is employed as the polyphenylene ether I.

3. A thermoplastic molding material as claimed in claim 1, wherein the copolymer II is selected from the group consisting of styrene/methyl acrylate, styrene/ethyl acrylate, styrene/butyl acrylate, styrene/ethylhexyl acrylate, butadiene/styrene/ methyl acrylate, butyl acrylate/styrene/methyl acrylate and butadiene/butyl acrylate/styrene/ methyl acrylate copolymers.

4. A thermoplastic molding material as claimed in claim 1 or 2 or 3, wherein components I and II are employed in a ratio of from 30–70% to 70–30%.

5. A thermoplastic molding material as claimed in claim 1 or 2 or 3 or 4, which contains a triaryl phosphate.

6. Use of the thermoplastic molding material as claimed in claim 1 or 2 or 3 or 4 or 5 for the production of moldings.